# EUROPÄISCHE PATENTSCHRIFT

(11) **EP 0 553 443 B1**
(45) Veröffentlichungstag und Bekanntmachung des Hinweises auf die Patenterteilung: **22.05.1996**
(21) Anmeldenummer: 92120787.4
(22) Anmeldetag: 05.12.1992
(51) Int. Cl.: B60T 8/88, B60T 8/00

(54) **Schaltung zur Ansteuerung und Überwachung induktiver Lasten, insbesondere von Magnetventilen, in einem Antiblockierregelsystem**
Circuit for operating and monitoring inductive loads, especially for magnetic valves, in an antilock regulating-system
Circuit pour la mise en route et la surveillance de charges inductives, spécialement de soupapes magnétiques dans un système de réglage antiblocage

(30) Priorität: 31.01.1992 DE 4202761
(43) Veröffentlichungstag der Anmeldung: 04.08.1993
(73) Patentinhaber: Hella KG Hueck & Co., D-59552 Lippstadt (DE); LUCAS INDUSTRIES PUBLIC LIMITED COMPANY, Solihull, West Midlands B91 3TX (GB)
(72) Erfinder: Niggemann, Detlef, W-4793 Steinhausen (DE); Wiegmann, Werner, W-4780 Lippstadt (DE); Heinz, Günther, W-5405 Ochtendung (DE); Schneider, Konrad, W-5453 Horhausen (DE)

(56) Entgegenhaltungen:
- EP-A- 0 025 913
- EP-A- 0 179 194
- EP-A- 0 340 918
- EP-A- 0 397 102
- EP-A- 0 402 928
- EP-A- 0 410 188
- EP-A- 0 418 665
- US-A- 3 920 284

## Beschreibung

### Schaltung zur Ansteuerung und überwachung induktiver Lasten, insbesondere von Magnetventilen in einem Antiblockierregelsystem

Antiblockierregelsysteme gehören zu den besonders sicherheitskritischen Einrichtungen an einem Kraftfahrzeug. Da Leben und Gesundheit von Fahrer und Beifahrern unmittelbar von der korrekten Funktion einer solchen Einrichtung abhängen, ist es nötig, die Funktion des Gesamtsystems und auch einzelner Komponenten genau zu überwachen. Besonders wichtig ist hierbei die überwachung der Magnetventile, die unmittelbar in die hydraulische Bremsanlage eingreifen, sowie die überwachung der die Magnetventile ansteuernden Schaltverstärker.

Die Erfindung betrifft daher eine Schaltung zur Ansteuerung und überwachung induktiver Lasten insbesondere von Magnetventilen in einem Antiblockierregelsystem, mit mindestens einem Schaltverstärker zum Anschalten mindestens einer induktiven Last an eine Spannungsquelle, mit einem Mikrocomputer, der den mindestens einen Schaltverstärker ansteuert und der jeweils den Spannungszustand am Verbindungspunkt von Schaltverstärker und induktiver Last überwacht, mit jeweils einem Schwellenmonitor, der den Spannungszustand am Verbindungspunkt detektiert und mit Schalteinrichtungen, welche bei angesteuertem Schaltverstärker eine Beendingung der Ansteuerung des Schaltverstärkers bewirken, sobald der Schwellenmonitor am Verbindungspunkt eine Spannung detektiert, die außerhalb des Schwellenbereiches des Schwellenmonitors liegt, wobei sowohl der Schwellenmonitor als auch die Schalteinrichtungen nicht Bestandteil des Mikrocomputers sind.

Eine solche Schaltung ist aus der EP-A-0 418 665 bekannt. Hierin steuert ein Computer mittels einer Kontroll- und einer Auswahlleitung über eine Logikschaltung einen Schaltverstärker an und überwacht mittels mehrerer Detektionseinrichtungen mögliche Fehler (Unterbrechung, Kurzschluß, andauernde Ansteuerung) des Stromkreises der induktiven Last.

Eine weitere überwachungsschaltung für ein Antiblockiersystem zeigt die US 3.920.284. Diese Schaltung prüft neben dem Zeitverhalten eines Blockiersignales auch die Strompfade von Magnetventilen auf Unterbrechung und Kurzschluß.

Aus der DE-OS 39 28 651 ist eine Schaltung bekannt, bei der ein Mikrocomputer über einen Endverstärker eine Last ansteuert. Eine überwachungsleitung führt dem Mikrocomputer ein Spannungssignal vom Verbindungspunkt zwischen Schaltverstärker und Last zu. Zusätzlich sind eine Widerstandsanordnung und eine ebenfalls vom Mikrocomputer angesteuerte Umschaltvorrichtung vorgesehen, welche die Spannung an verschiedenen Punkten des Lastkreises abtastet und über eine zusätzliche Signalleitung dem Mikrocomputer zuführt.

Weiterhin ist vorgesehen, daß der Mikrocomputer einmalig oder insbesondere regelmäßig, also auch während eines Antiblockierregelvorganges den Endverstärker so kurzzeitig ansteuert, daß das Magnetventil nicht betätigt wird. Währenddessen fragt der Mikrocomputer über die Umschaltvorrichtung die an verschiedenen Punkten auftretenden Spannungswerte ab. Hierdurch kann der Mikrocomputer Kurzschlüsse und/oder Leitungsunterbrechungen in dem aus Endverstärker und Magnetventil bestehenden Lastkreis erkennen.

Eine solche Anordnung stellt sich hardwaremäßig und softwaremäßig recht aufwendig dar. Es ist nämlich zusätzlich zum Endverstärker eine Widerstandsanordnung und eine Umschalteinrichtung erforderlich. Diese belegen mit der Steuerleitung vom Mikrocomputer zur Umschaltvorrichtung und der das abgetastete Spannungssignal an den Mikrocomputer rückleitenden Signalleitung mindestens zwei zusätzliche Anschlüsse des Mikrocomputers und zwar jeweils für jedes vom Mikrocomputer angesteuerte Magnetventil.

Zudem erfordert die kontinuierliche überwachung einen zusätzlichen Softwareaufwand, insbesondere wenn die Spannungsüberwachung auch während eines Antiblockierregelvorganges durchgeführt werden soll. Hierzu muß der Mikrocomputer nämlich während eines ohnehin aufwendigen Regelvorgangs praktisch zwischendurch den Endverstärker kurzzeitig ansteuern, ohne das Magnetventil zu betätigen. Außerdem muß der Mikrocomputer die Umschalteinrichtung ansteuern und verschiedene Spannungen detektieren, und dies, ohne den ohnehin komplizierten Antiblockierregelvorgang negativ zu beeinflussen.

Nachteilig an diese Anordnung ist vor allem, daß sowohl die Ansteuerung als auch die überwachung der Schaltverstärker allein durch den Mikrocomputer erfolgt. Tritt nun am Endverstärker eine zu hohe Verlustleistung auf, beispielsweise durch einen nicht vollkommen durchgesteuerten Endstufentransistor oder durch einen Wicklungsschluß in den Magnetventilspulen, so ist die Schnelligkeit der Detektion des Fehlers und der daraus resultierenden Abschaltung der Ansteuerung des Endverstärkers insbesondere abhängig von der Programmablaufzeit des Mikrocomputers. Diese liegt in der Größenordnung von einigen Millisekunden und ist im allgemeinen nicht ausreichend, um den durch die erhöhte Verlustleistung gefährdeten Transistor vor der Zerstörung zu bewahren. Einer der genannten Fehler führt also nahezu zwangsläufig zur Zerstörung des Endverstärkers.

Der Erfindung liegt daher die Aufgabe zugrunde, eine Schaltung gemäß des Oberbegriffs zu schaffen, die einfach und kostengünsig aufgebaut ist, die gegenüber dem Vorbekannten eine höhere Betriebssicherheit aufweist, sowie die Ansteuerung und Überwachung des Lastkreises durch einen Mikrocomputer auf weniger aufwendige Weise ermöglicht.

Diese Aufgabe wird erfindungsgemäß dadurch gelöst, daß mindestens eine überspannungserkennungsschaltung vorgesehen ist, die den beim Abschaltvorgang der induktiven Last auftretenden Spannungsimpuls am Verbindungspunkt erkennt und eine Ansteuerung des jeweiligen Schaltverstärkers vornimmt, um die Höhe dieses Abschaltungsimpulses auf einen Maximalwert zu begrenzen.

Die besonders vorteilhafte erfindungsgemäße Schaltungsmaßnahme dient insbesondere zum Schutz des Schaltverstärkers. Ein solcher spannungsbegrenzender Regelvorgang kann nicht oder nur mit großem Aufwand mittels einer Ansteuerung des Schaltverstärkers durch den Mikrocomputer realisiert werden.

Bei der erfindungsgemäßen Schaltung wird ebenfalls der Spannungszustand an der Verbindungsstelle zwischen Schaltverstärker und induktiver Last durch den steuernden Mikrocomputer überwacht, wie dies schon aus den genannten Entgegenhaltungen bekannt ist. Auf eine Spannungsüberwachung verschiedener Meßpunkte des Lastkreises durch den Mikrocomputer, wie bereits in der DE-OS 39 28 651 beschrieben, wird bei der erfindungsgemäßen Schaltung jedoch verzichtet, wodurch auf die Umschalteinrichtung zum Abtasten der Spannung an verschiedenen Meßpunkten die Widerstandsanordnung und zumindest zwei Signalleitungen vom und zum Mikrocomputer eingespart werden können. Statt dessen sind Einrichtungen vorgesehen, die beim Auftreten kritischer Spannungszustände bei angesteuertem Schaltverstärker eine Beendigung der Ansteuerung bewirken. Diese Einrichtungen sind schaltungsmäßig sehr einfach aufgebaut und bestehen aus einfachen Grundschaltungen wie einem Schwellenmonitor, einer logischen Und-Schaltung, einer Verzögerungsschaltung und einem Speicherelement.

Hierdurch erfolgt im Fehlerfall die Beendigung der Ansteuerung des Schaltverstärkers ohne Beteiligung des Mikrocomputers. Da die Abschaltung somit von der Programmablaufzeit (hierbei ist insbesondere die Zeit gemeint, die der Mikrocomputer zum Durchlaufen seines Prüfprogramms benötigt) des Mikrocomputers unabhängig ist, kann die Abschaltung sehr schnell erfolgen und ist typischerweise in der Größenordnung 10³-mal schneller als eine durch den Mikrocomputer bewirkte Abschaltung. Hierdurch kann selbst bei einem Kurzschluß im Lastkreis der Schaltverstärker vor der Zerstörung bewahrt werden.

Die zusätzliche Spannungsüberwachung der Verbindungspunkte zwischen Schaltverstärker und Last durch den Mikrocomputer ist besonders für jene Fehler sinnvoll, die keine sofortige Beendigung der Ansteuerung des Schaltverstärkers erfordern, beispielsweise wenn infolge einer Leitungsunterbrechung im Lastkreis eine Ansteuerung der Last gar nicht erst möglich ist. Ein solcher Fehler ist im allgemeinen weniger kritisch als eine fortgesetzte fehlerhafte Ansteuerung, da bei einem Antiblockierregelsystem ein nicht angesteuertes Magnetventileinen Bremsvorgang ohne Hilfe des Antiblockierregelsystems ermöglicht. Hierbei ist es ausreichend, wenn der Mikrocomputer nach einigen Millisekunden den Fehler erkennt und beispielsweise eine Fehlermeldung abgibt, oder die Spannungsversorgung der Magnetventile über ein in deren Spannungsversorgungsleitung geschaltetes Relais unterbricht.

Bei der erfindungsgemäßen Schaltung beschränkt sich somit die Prüfaufgabe des Mikrocomputers auf die überprüfung eines Spannungssignales pro angesteuerter, induktiver Last. Der Mikrocomputer ist somit von komplexen Prüfaufgaben, die einen größeren Softwareaufwand erfordern, entlastet. Vorteilhaft ist auch, daß die Anzahl der benötigten Steuerleitungen gering gehalten werden kann.

Weitere vorteilhafte Ausgestaltungen der erfindungsgemäßen Schaltung gehen aus den Unteransprüchen hervor.

So ist es vorteilhaft, eine Signalleitung vorzusehen, die mit einem zum Mikrocomputer gehörenden Zeitgeber verbunden ist. Dieser Zeitgeber wird zusammen mit dem Beginn der Ansteuerung eines Schaltverstärkers gestartet und beendet die Ansteuerung des Schaltverstärkers nach Ablauf einer vorgegebenen Zeit. Damit ist es möglich, die Lasten sehr kurzzeitig anzusteuern, wodurch das Druckniveau im hydraulischen Teil des Antiblockierregelsystems begrenzt werden und eine sehr feinsinnige Regelung des Bremsdrucks ermöglicht wird.

Vorteilhafterweise faßt man die Komponenten der Ansteuerungs- und Überwachungsschaltung mit Ausnahme des Mikrocomputers und des mindestens einen Lastkreises zu einem integrierten Schaltkreis zusammen. Besonders günstig ist es hierbei, Schaltungseinheiten zu bilden, wobei eine Schaltungseinheit aus den Komponenten zur Ansteuerung mehrerer, vorzugsweise zweier Lastkreise besteht. Eine solche Schaltungseinheit besitzt einen gemeinsamen Logikteil, über welche die Verbindung der Ansteuerungs- und Überwachungszweige zum Mikrocomputer hergestellt wird. Besonders günstig ist es, gleich mehrere dieser Schaltungseinheiten zu einem integriertem Schaltkreis zusammenzufassen. Hierdurch kann insbesondere die Anzahl der benötigten Signalleitungen vom und zum Mikrocomputer verringert werden. Dies geschieht insbesondere dadurch, daß einzelne Signalleitungen von mehreren Schaltungseinheiten gemeinsam benutzt werden. Eine weitere Möglichkeit, die Anzahl der Signalleitungen gering zu halten, besteht darin, die an mehreren Verbindungspunkten zwischen Schaltverstärker und induktiver Last abgenommenen Spannungssignale nacheinander auf eine gemeinsame zum Mikrocomputer führende Signalleitung zu schalten. Durch die Verwendung solcher Multiplexeinrichtungen werden dabei um so mehr Signalleitungen eingespart, je mehr Schaltungseinheiten zu einem integrierten Schaltkreis zusammengefaßt werden. Es ist dabei durchaus möglich, die Ansteuerungs- und Überwachungsschaltungen für sämtliche Lastkreise eines Antiblockierregelsystems zu einem integrierten Schaltkreis zusammenzufassen.

Enthält das Antiblockierregelsystem mehrere steuernde Mikrocomputer, so erweist sich eine Aufteilung der Ansteuerungs- und Überwachungsschaltungen auf mehrere integrierte Schaltkreise als sinnvoll, so daß zu jedem Mikrocomputer eindeutig ein ihm zugeordneter Schaltkreis existiert.

Zwei Ausführungsbeispiele der erfindungsgemäßen Schaltung sind in den Zeichnungen dargestellt und werden im folgenden anhand der Zeichnungen näher erläutert.
Figur 1 zeigt schematisch den Aufbau einer Schaltungseinheit der erfindungsgemäßen Schaltung,
Figur 2 zeigt eine vorteilhafte Variante des in der Figur 1 dargestellten Ausführungsbeispiels.

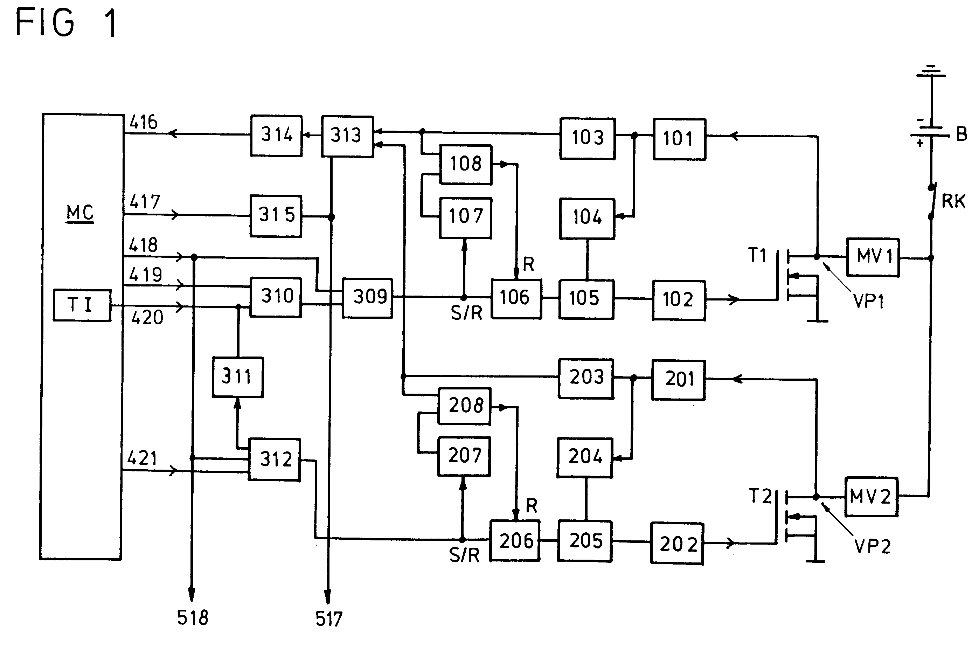

Die Figur 1 zeigt eine Schaltungseinheit der erfindungsgemäßen Schaltung. Diese besteht aus zwei Ansteuerungs- und Überwachungszweigen (101 bis 108, 201 bis 208) zur Ansteuerung zweier Schaltverstärker (T1, T2), welche jeweils eine induktive Last (MV1, MV2) an eine Spannungsquelle (B) anschalten können. Diese induktiven Lasten sind beispielsweise Magnetventile in einem Antiblockierregelsystem, wobei das erste Magnetventil (MV1) zum Halten und das zweite Magnetventil (MV2) zum Absenken des hydraulischen Druckes in der zu einem Rad gehörenden Bremsleitung vorgesehen ist. Die in der Figur gezeigte Schaltungseinheit stellt somit die Ansteuerungs- und Überwachungsschaltung für einen von vier Regelkanälen einer Antiblockierregelanlage dar.

Die die Magnetventile (MV1, MV2) ansteuernden, als Power-MOS-Transistoren ausgeführten Schaltverstärker (T1, T2) werden jeweils über eine Spannungsbegrenzungsschaltung (102, 202) von einer Stromquelle (105, 205) angesteuert. Dieses geschieht in Abhängigkeit vom Schaltzustand eines Speicherelementes (106, 206).

Die Spannungsbegrenzungsschaltung (102, 202) hat hierbei die Funktion, die bei Schaltvorgängen am Steuereingang des Schaltverstärkers (T1, T2) anliegenden Spannungsspitzen zu begrenzen und so den Schaltverstärker (T1, T2) vor Zerstörung zu schützen.

Eine solche Strombegrenzungsschaltung kann im einfachsten Fall als einfache Zenerdiodenschaltung ausgeführt werden. Vorteilhafte Ausführungsformen sind unter Zuhilfenahme eines Verstärkerbausteins realisierbar.

Über die Eingangsschutzschaltung (101, 201) wird jeweils vom Verbindungspunkts des Schaltverstärkers (T1, T2) und der Magnetventile (MV1, MV2) ein Spannungssignal dem Schwellenmonitor (103, 203) und der Überspannungserkennungsschaltung (104, 204) zugeführt. Die Überspannungserkennungsschaltungen (104, 204) reagieren auf Spannungen oberhalb eines vorgegebenen Maximalwertes von typischerweise ca. 40 Volt, wie sie insbesondere beim Abschalten der induktiven Magnetventile (MV1, MV2) als Abschaltspannungsspitzen auftreten. Detektiert nun die Überspannungserkennungsschaltung (104, 204) Spannungswerte oberhalb des Maximalwertes, so wirkt sie auf die Stromquelle (105, 205) dergestalt ein, daß diese den Schaltverstärker (T1, T2) derart ansteuert, daß der Spannungsimpuls den vorgegebenen Maximalwert nicht überschreitet.

Die Schwellenmonitore (103, 203) geben in Abhängigkeit von der Höhe der an den Verbindungspunkten (VP1, VP2) detektierten Spannung jeweils ein logisches Signal ab. Dieses logische Signal wird über den Monitorsignalumschalter (313) einen Ausgangstreiber (314) und die Monitorsignalleitung (416) an den steuernden Mikrocomputer (MC) gegeben, der in Abhängigkeit von diesem logischen Signal und dem von ihm momentan abgegebenen Steuersignal an das entsprechende Magnetventil (MV1, MV2) erkennen kann, ob im jeweiligen Lastkreis (T1, MV1, B bzw. T2, MV2, B) etwa ein Kurzschluß oder eine Leitungsunterbrechung vorliegt.

Stellt nun der Mikrocomputer (MC) einen solchen Fehler fest, so schaltet er entweder das fehlerhafte Magnetventil (MV1, MV2) oder über einen Sperrsignaleingang (418) sämtliche Magnetventile ab, so daß die Bremsanlage auf Bremsen ohne Unterstützung durch das Antiblockierregelsystem zurückgeführt wird. Dieses Sperrsignal wird über die Signalleitung (518) auch an weitere Schaltungseinheiten bzw. Regelkanäle weitergegeben und führt somit zu einer Abschaltung sämtlicher Magnetventile der Antiblockierregelanlage. Über den Sperrsignaleingang (418) kann der Mikrocomputer (MC) auch beim Auftreten von Fehlern in anderen, in der Figur nicht dargestellten Teilen der Antiblockierregelanlage die Ansteuerung der Magnetventile (MV1, MV2) sperren.

Eine besondere Bedeutung dieses Sperrsignaleingangs liegt darin, daß dieser mit weiteren, in der Figur 1 nicht dargestellten Einrichtungen verbunden sein kann (z. B. mit einem zweiten Mikrocomputer oder einer externen Überwachungsschaltung ("Watch-Dog")) und so einen zusätzlichen, unabhängigen Überwachungszweig bildet.

Über ein Multiplexsignal, welches über die Multiplexsignalleitung (417) und die Eingangsschutzschaltung (315) dem Monitorsignalumschalter (313) zugeführt wird, schaltet der Mikrocomputer (MC) zwischen den Monitorsignalen der Schwellenmonitore (103, 203) hin und her. Es wird damit nur eine Monitorsignalleitung (416) für zwei Magnetventile benötigt. Da das gleiche Multiplexsignal über die Signalleitung (517) auch den weiteren Regelkanälen zugeführt wird, kann somit pro weiteren zwei Magnetventilen jeweils eine Signalleitung zum Mikrocomputer eingespart werden.

Die Auswahl der anzusteuernden Magnetventile erfolgt über die Auswahlleitungen (418 bis 421). Zum Ansteuern mindestens eines Magnetventils muß auf der Sperrsignalleitung (418 (aktive low)) ein High-Signal liegen, da sonst der Logikbaustein (309) die Ansteuerung der Magnetventile sperrt. Die Kombination der logischen Signale auf den Auswahlleitungen (419 bis 421) bestimmt nun welche der Magnetventile (MV1, MV2) gerade angesteuert werden. Liegt beispielsweise auf der Auswahlleitung (419) ein Low-Signal und auf den Auswahlleitungen (420 bis 421) jeweils ein High-Signal, so wird ausschließlich das Magnetventil (MV1) angesteuert. Über die Logikbausteine (310, 309) wird ein High-Signal auf den Set-Reset-Eingang (S/R) des Speicherelements (106) gegeben und dieses gesetzt. Das Speicherelement (106) steuert nun über die Stromquelle (105) und die Ausgangsspannungsbegrenzungsschaltung (102) sowie den Schaltverstärker (T1) das Magnetventil (MV1) ein. Erst nach dem Durchschalten des Schaltverstärkers (T1) gelangt das High-Signal vom Logikbaustein (309) über die Verzögerungsschaltung (107) auf den Logikbaustein (108). Detektiert nun der Schwellenmonitor (103) am Verbindungspunkt (VP1) zwischen Schaltverstärker (T1) und Magnetventil (MV1), die oberhalb eines Schwellwertes liegt, was auf eine fehlerhafte Ansteuerung des Magnetventils (MV1) hindeutet, so gibt der Schwellenmonitor (103) ein High-Signal ab. Dieses gelangt an den Monitorsignalumschalter (313) und ebenfalls an die Logikschaltung (108).

Da von der Verzögerungsschaltung (107) ebenfalls ein High-Signal an diesem Logikbaustein (108) anliegt, setzt dieser das Speicherelement (106) über dessen Reset-Eingang (R) zurück und beendet so die fehlerhafte Ansteuerung des Magnetventils (MV1). Die Zeitkonstante der Verzögerungsschaltung (107) ist hierbei sehr kurz eingestellt und liegt in der Größenordnung Mikrosekunden.

Die Verzögerungsschaltung dient hierbei zum Entprellen des Abschaltmechanismus während des Einschaltens des Magnetventils (MV1).

Eine weitere Entprellung ist innerhalb des Schwellenmotors (103) vorgesehen, so daß kurzzeitig Störimpulse nicht zu einer Abschaltung der induktiven Last führt.

Auf gleichartige Weise erfolgt die Ansteuerung und Überwachung des Schaltverstärkers (T2) und des Magnetventils (MV2) über den Ansteuerungs- und Überwachungszweig (201 bis 208) der erfindungsgemäßen Schaltung.

Die erfindungsgemäße Ansteuerungs- und Überwachungsschaltung erkennt und beseitigt somit selbständig, das heißt, ohne Beteiligung des ansteuernden Mikrocomputers (MC) eine fehlerhafte Ansteuerung der Schaltverstärker (T1, T2) bzw. der Magnetventile (MV1, MV2).

Da der Spannungszustand an den Verbindungspunkten (VP1, VP2) über die genannten Einrichtungen (101, 103 bzw. 201, 203, 313, 314, 416) auch an den Mikrocomputer (MC) gegeben wird, erkennt auch der Mikrocomputer (MC) fehlerhafte Spannungszustände und kann entsprechend die Ansteuerung des Schaltverstärkers beenden. Da diese Art der Abschaltung allerdings von der Programmablaufzeit des Mikrocomputers abhängt, ist sie um ein Vielfaches langsamer als die zuvor beschriebene, hardwaremäßige Abschaltung, deren Zeitverhalten im wesentlichen durch die Zeitkonstante der Verzögerungsschaltung (108, 208) bestimmt wird.

Trotzdem ist es sinnvoll, den Mikrocomputer mit einem vom Spannungszustand an den Verbindungspunkten (VP1, VP2) abhängigen Signal zu versorgen, da der Mikrocomputer (MC) darüberhinaus noch weitere Fehler erkennen kann, bei dem keine sofortige Abschaltung nötig ist. Tritt z. B. in einem Lastkreis eine Leitungsunterbrechung auf, beispielsweise eine Unterbrechung in der Wicklung des Magnetventils (MV1), so tritt bei nichtangesteuertem Schaltverstärker (T1) am Verbindungspunkt (VP1) ein zu niedriges Potential auf, daß der Mikrocomputer (MC) detektieren kann. Da sich das Magnetventil (MV2) gar nicht erst einschalten läßt, ist eine schnelle Abschaltung des Magnetventils (MV2) hier natürlich auch gar nicht möglich und nötig.

Das gleiche Signal erhält der Mikrocomputer bei nicht angesteuertem Schaltverstärker (T1), in dem Fall, daß der Schaltverstärker (T1) einen Kurzschluß aufweist und das Magnetventil (MV1) dauernd ansteuert. Bei Auftreten eines solchen Fehlers kann die Ansteuerung eines solchen Magnetventils (MV1) nicht durch Manipulation der Ansteuerung des Schaltverstärkers (T1) verhindert werden. Die Abschaltung des fehlerhaft angesteuerten Magnetventils (MV1) hat hier auf alle Fälle extern zu erfolgen, beispielsweise über einen in die Spannungsversorgungsleitung der Magnetventile eingeschalteten Kontakt (RK) eines Sicherheitsrelais, welches im Fehlerfalle abgeschaltet wird. Die Abschaltung dieses Sicherheitsrelais kann insbesondere durch den Mikrocomputer (MC) bewirkt werden, weshalb eine Fehlerüberwachung der Lastkreise durch den Mikrocomputer (MC) auf alle Fälle sinnvoll ist.

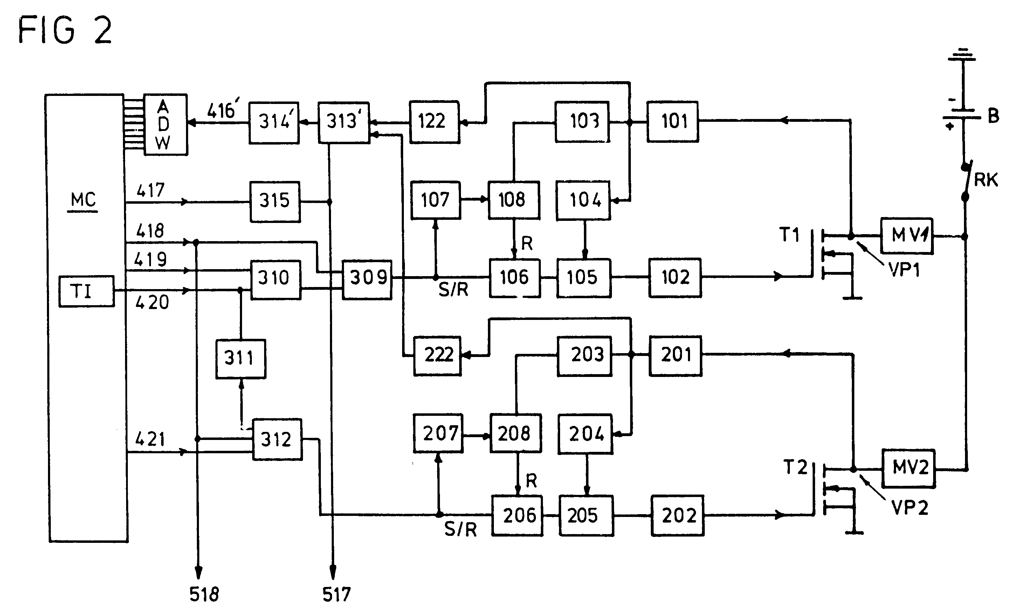

Die Figur 2 zeigt eine vorteilhafte Variante der in der Figur 1 beschriebenen Ausführungsform. Der einzige Unterschied zur zuvor beschriebenen Schaltung besteht darin, daß hier dem Mikrocomputer (MC) über die Monitorsignalleitung (416') kein digitales, sondern ein analoges Signal zugeführt wird.

Dieses analoge Signal wird von der Analogsignalaufbereitungsschaltung (122, 222) aus den von der Monitoreingangsschutzschaltung (101, 201) abgegebenen Spannungssignalen generiert.

Die Weitergabe dieses analogen Monitorsignals über den Monitorsignalumschalter (313') und den Ausgangstreiber (314') auf die Monitorsignalleitung (416') erfolgt auf gleiche weise, wie in dem zuvor beschriebenen Ausführungsbeispiel, wobei die genannten Schaltungselemente (313', 314', 416') hier speziell zur Verarbeitung analoger Signale ausgelegt sind.

Das analoge Monitorsignal gelangt über die Monitorsignalleitung (416') an einen Analog-Digital-Wandler (ADW), der ein dem Monitorsignal entsprechendes, mehrere Bit breites, digitales Datenwort an den Mikrocomputer (MC) weitergibt. Hierdurch erhält der Mikrocomputer (MC) Informationen über die konkrete Höhe der Spannungen an den Verbindungspunkten (VP1, VP2), so daß mit dieser Ausführungsform nicht nur eine qualitative, sondern auch eine quantitative Überwachung der Funktionen der Magnetventile (MV2) und der Schaltverstärker (T1, T2) ermöglicht wird.

### Bezugszeichenliste

### Schaltung zur Ansteuerung und Überwachung induktiver Lasten, insbesondere von Magnetventilen in einem Antiblockierregelsystem

- 101, 201: Monitoreingangsschutzschaltung
- 102, 202: Ausgangsspannungsbegrenzungsschaltung
- 103, 203: Schwellenmonitor
- 104, 204: Überspannungserkennungsschaltung
- 105, 205: Stromquelle
- 106, 206: Speicherelement
- 107, 207: Verzögerungsschaltung
- 108, 208: Logikbaustein (UND)
- 309: Logikbaustein (UND)
- 310: Logikbaustein (ODER)
- 311: Logikbaustein (NICHT)
- 312: Logikbaustein (UND)
- 313, 313': Monitorsignalumschalter
- 314, 314': Ausgangstreiberschaltung
- 315: Eingangsschutzschaltung
- 416, 416': Monitorsignalleitung
- 417: Multiplexeingang
- 418, 518: Sperrsignaleingang
- 419: Halteventilsteuereingang
- 420: Timereingang
- 421: Absenkventilsteuereingang
- 517: Multiplexleitung (fortgeführt)
- 122, 222: Analog-Signal-Aufbereitungsschaltung
- T1, T2: Schaltverstärker
- MV1, MV2: Magnetventile (induktive Last)
- B: Spannungsquelle
- MC: Mikrocomputer
- VP1, VP2: Verbindungspunkte (zwischen Schaltverstärker und induktiver Last)
- RK: Relaiskontakt
- R: Reseteingang
- S/R: Set-/Reseteingang

## Patentansprüche

1. Schaltung zur Ansteuerung und überwachung induktiver Lasten (MV1, MV2), insbesondere von Magnetventilen in einem Antiblockierregelsystem, mit mindestens einem Schaltverstärker (T1, T2) zum Anschalten der mindestens einen induktiven Last (MV1, MV2) an eine Spannungsquelle (B), mit einem Mikrocomputer (MC), der den mindestens einen Schaltverstärker (T1, T2) ansteuert und der jeweils den Spannungszustand am Verbindungspunkt (VP1, VP2) vom Schaltverstärker (T1, T2) und induktiver Last (MV1, MV2) überwacht, mit jeweils einem Schwellenmonitor (103, 203), der den Spannungszustand am Verbindungspunkt (VP1, VP2) detektiert und mit Schalteinrichtungen (106, 107, 108, 206, 207, 208), welche bei angesteuertem Schaltverstärker (T1, T2) eine Beendigung der Ansteuerung des Schaltverstärkers (T1, T2) bewirken, sobald der Schwellenmonitor (103, 203) am Verbindungspunkt (VP1, VP2) eine Spannung detektiert, die außerhalb des Schwellenbereichs des Schwellenmonitors liegt, wobei sowohl der Schwellenmonitor (103, 203) als auch die Schalteinrichtungen (106, 107, 108, 206, 207, 208) nicht Bestandteil des Mikrocomputers (MC) sind, dadurch gekennzeichnet, daß mindestens eine überspannungserkennungsschaltung (104, 204) vorgesehen ist, die den beim Abschaltvorgang der induktiven Last (MV1, MV2) auftretenden Spannungsimpuls am Verbindungspunkt (VP1, VP2) erkennt und eine Ansteuerung des jeweiligen Schaltverstärkers (T1, T2) vornimmt, um die Höhe dieses Abschaltungsimpulses auf einen Maximalwert zu begrenzen.

2. Schaltung nach Anspruch 1, dadurch gekennzeichnet, daß die Schalteinrichtungen (106, 107, 108, 206, 207, 208) die Ansteuerung des jeweiligen Schaltverstärkers (T1, T2) unabhängig von Steuersignalen des Mikrocomputers (MC) beenden.

3. Schaltung nach Anspruch 1, dadurch gekennzeichnet, daß eine Ausgangstreiberschaltung (314) vorgesehen ist, welche dem Mikrocomputer (MC) jeweils ein vom Spannungszustand eines Verbindungspunktes (VP1, VP2) abhängiges Signal zuführt.

4. Schaltung nach Anspruch 3, dadurch gekennzeichnet, daß eine Umschalteinrichtung (313) vorgesehen ist, welche die den Spannungszuständen mehrerer Verbindungspunkten (VP1, VP2) entsprechenden Signale nacheinander an die Ausgangstreiberschaltung (314) gibt.

5. Schaltung nach Anspruch 3, dadurch gekennzeichnet, daß die von den Spannungszuständen der Verbindungspunkte (VP1, VP2) abhängigen Signale digitale Signale sind.

6. Schaltung nach Anspruch 3, dadurch gekennzeichnet, daß die von den Spannungszuständen der Verbindungspunkte (VP1, VP2) abhängigen Signale analoge Signale sind.

7. Schaltung nach Anspruch 6, dadurch gekennzeichnet, daß zwischen Ausgangstreiberschaltung (314') und dem Mikrocomputer (MC) ein Analog-Digital-Wandler (ADW) geschaltet ist, welcher den analogen Signalen entsprechende mehrere Bit breite Datenworte an den Mikrocomputer (MC) gibt.

8. Schaltung nach Anspruch 1, dadurch gekennzeichnet, daß eine Spannungsbegrenzungsschaltung (102, 202) vorgesehen ist, die die Spannung am Steuereingang des Schaltverstärkers (T1, T2) auf einen Maximalwert begrenzt.

9. Schaltung nach Anspruch 1, dadurch gekennzeichnet, daß eine Umschaltsignalleitung (420) vorgesehen ist, die mit einem zum Mikrocomputer (MC) gehörenden Zeitglied (TI) in Verbindung steht und die vom Zeitgeber (TI) nach einer vorgegebenen Zeit nach Beginn der Ansteuerung eines Schaltverstärkers (T1, T2), mit einem Signal beaufschlagt wird, das zur Beendigung der Ansteuerung des Schaltverstärkers (T1, T2) führt.

10. Schaltung nach Anspruch 1, dadurch gekennzeichnet, daß ein Sperrsignaleingang (418) vorgesehen ist, über den die Ansteuerung aller induktiven Lasten (MV1, MV2) verhindert oder beendet werden kann.

11. Schaltung nach Anspruch 1, dadurch gekennzeichnet, daß eine Schaltungseinheit der Ansteuerungs- und überwachungsschaltung aus zwei identisch aufgebauten Ausgangs- und überwachungszweigen (101 bis 108, 201 bis 208) zur Ansteuerung von zwei Schaltverstärkern (T1, T2) besteht.

12. Schaltung nach Anspruch 11, dadurch gekennzeichnet, daß die zu einer Schaltungseinheit gehörenden Ansteuerungs- und überwachungszweige (101 bis 108, 201 bis 208) einen gemeinsamen Verbindungsteil (309 bis 517) zum Mikrocomputer (MC) besitzen.

13. Schaltung nach Anspruch 11 oder 12, dadurch gekennzeichnet, daß mehrere Schaltungseinheiten zu einem integrierten Schaltkreis zusammengefaßt sind.

14. Schaltung nach Anspruch 13, dadurch gekennzeichnet, daß genau zwei Schaltungseinheiten zu einem integrierten Schaltkreis zusammengefaßt sind.

## Claims

1. Circuit for controlling and monitoring inductive loads (MV1, MV2), in particular of magnetic valves in an anti-blocking control systems, comprising at least one switching amplifier (T1, T2) for connecting the at least one inductive load (MV1, MV2) to a power supply (B), with a microcomputer (MC) which controls the at least one switching amplifier (T1, T2) and which monitors a respective voltage condition at the connecting point (VP1, VP2) between switching amplifier (T1, T2) and inductive load (MV1, MV2), with a respective threshold monitor (103, 203) which detects the voltage condition at the connecting point (VP1, VP2), and with switching devices (106, 107, 108, 206, 207, 208) which terminate the control of a switching amplifier (T1, T2) once the switching amplifier (T1, T2) has been activated as soon as the threshold monitor (103, 203) detects a voltage at the connecting point (VP1, VP2) which lies outside the threshold range of the threshold monitor, and that both the threshold monitor (103, 203) and the switching devices (106, 107, 108, 206, 207, 208) are not part of the microcomputer (MC), **characterized in that** at least one overvoltage detection circuit (104, 204) is provided, which detects a voltage pulse which develops during the disconnecting process of the inductive load (MV1, MV2) at the connecting point (VP1, VP2) and carries out a control of a respective switching amplifier (T1, T2) in order to limit the value of said disconnecting pulse to a maximum value.

2. Circuit according to Claim 1, **characterized in that** the switching devices (106, 107, 108, 206, 207, 208) terminate the control of a respective switching amplifier (T1, T2) independently from control signals of the microcomputer (MC).

3. Circuit according to Claim 1, **characterized in that** an output driver circuit (314) is provided which delivers to the microcomputer (MC) a signal which is dependent on the voltage condition at a connecting point (VP1, VP2).

4. Circuit according to Claim 3, **characterized in that** a switchover device (313) is provided which delivers the signals which correspond with the voltage conditions of a plurality of connecting points (VP1, VP2) one after the other to the output driver circuit (314).

5. Circuit according to Claim 3, **characterized in that** the signals which are dependent on the voltage conditions at the connecting points (VP1, VP2) are digital signals.

6. Circuit according to Claim 3, **characterized in that** the signals which are dependent on the voltage conditions at the connecting points (VP1, VP2) are analog signals.

7. Circuit according to Claim 6, **characterized in that** between the output driver circuit (314') and the microcomputer (MC) is connected an analog/digital converter (ADW) which delivers to the microcomputer (MC) data words which are several bits wide and correspond with the analog signals.

8. Circuit according to Claim 1, **characterized in that** a voltage limiting circuit (102, 202) is provided which defines the voltage at the control input of the switching amplifier (T1, T2) to a maximum value.

9. Circuit according to Claim 1, **characterized in that** a switchover signal line (420) is provided, which is connected to a time element which is part of the microcomputer (MC) and which is, after a preset time after starting the control of a switching amplifier (T1, T2), loaded by the timing device (TI) with a signal which causes termination of a connection of the switching amplifier (T1, T2).

10. Circuit according to Claim 1, **characterized in that** a blocking-signal input (418) is provided by means of which the connection of all inductive loads (MV1, MV2) can be prevented or terminated.

11. Circuit according to Claim 1, **characterized in that** a switching unit of the control and monitoring circuit is composed of two identically designed output and monitoring branches (101 to 108, 201 to 208) for connecting two switching amplifiers (T1, T2).

12. Circuit according to Claim 11, **characterized in that** the connecting and monitoring branches (101 to 108, 201 to 208), which are part of a circuit unit, include a common connecting element (309 to 517) to the microcomputer (MC).

13. Circuit according to Claim 11 or 12, **characterized in that** a plurality of switching units are combined into one integrated switching circuit.

14. Circuit according to Claim 13, **characterized in that** exactly two switching units are combined into one integrated switching circuit.

## Revendications

1. Circuit pour commander et surveiller des charges inductives (MV1, MV2), en particulier des électrovannes dans un circuit de réglage antiblocage, comprenant au moins un amplificateur de connexion (T1, T2) pour connecter au moins une charge inductive (MV1, MV2) à une source de tension (B), un micro-ordinateur (MC) qui commande ou active l'amplificateur de connexion (T1, T2) et surveille chaque fois la tension au point de liaison (VP1, VP2) de l'amplificateur de connexion (T1, T2) et de la charge inductive (MV1, MV2), avec chaque fois un contrôleur à seuil (103, 203) qui détecte la tension au point de liaison (VP1, VP2), ainsi que des dispositifs de commutation (106, 107, 108, 206, 207, 208) qui, lorsque l'amplificateur de connexion (T1, T2) est activé, produisent la fin de l'activation de cet amplificateur dès que le contrôleur à seuil (103, 203) détecte au point de liaison (VP1, VP2) une tension en dehors de la plage à seuil du contrôleur, ce dernier (103, 203) et les dispositifs de commutation (106, 107, 108, 206, 207, 208) ne faisant pas partie du micro-ordinateur (MC), caractérisé en ce que l'on a prévu au moins un circuit de reconnaissance de surtension (104, 204) qui reconnaît l'impulsion de tension se produisant au point de liaison (VP1, VP2) à la coupure de la charge inductive (MV1, MV2) et commande l'amplificateur de connexion (T1, T2) concerné de manière à limiter l'amplitude de cette impulsion de coupure à une valeur maximale.

2. Circuit selon la revendication 1, caractérisé en ce que les dispositifs de commutation (106, 107, 108, 206, 207, 208) arrêtent l'activation de l'amplificateur de connexion (T1, T2) concerné indépendamment de signaux de commande du micro-ordinateur (MC).

3. Circuit selon la revendication 1, caractérisé en ce que l'on a prévu un circuit d'attaque de sortie (314) qui envoie chaque fois au micro-ordinateur (MC) un signal dépendant de la tension à un point de liaison (VP1, VP2).

4. Circuit selon la revendication 3, caractérisé en ce que l'on a prévu un dispositif commutateur (313) qui délivre successivement au circuit d'attaque de sortie (314) des signaux correspondant aux tensions à plusieurs points de liaison (VP1, VP2).

5. Circuit selon la revendication 3, caractérisé en ce que les signaux dépendant des tensions aux points de liaison (VP1, VP2) sont des signaux numériques.

6. Circuit selon la revendication 3, caractérisé en ce que les signaux dépendant des tensions aux points de liaison (VP1, VP2) sont des signaux analogiques.

7. Circuit selon la revendication 6, caractérisé en ce qu un convertisseur analogique-numérique (ADW) est connecté entre le circuit d'attaque de sortie (314') et le micro-ordinateur (MC), convertisseur qui délivre au micro-ordinateur (MC) des mots de données, d'une largeur de plusieurs bits, qui correspondent aux signaux analogiques.

8. Circuit selon la revendication 1, caractérisé en ce que l'on a prévu un circuit limiteur de tension (102, 202) qui limite la tension à l'entrée de commande de l'amplificateur de connexion (T1, T2) à une valeur maximale.

9. Circuit selon la revendication 1, caractérisé en ce que l'on a prévu une ligne de signal de commutation (420) qui est en liaison avec un élément à temps (TI) coordonné au micro-ordinateur (MC) et qui, au bout d'un temps prédéterminé après le début de l'activation d'un amplificateur de connexion (T1, T2), transmet au micro-ordinateur (MC) un signal qui provoque la fin de l'activation de l'amplificateur (T1, T2).

10. Circuit selon la revendication 1, caractérisé en ce que l'on a prévu une entrée de signal de blocage (418) à travers de laquelle peut être empêchée ou arrêtée la commande de toutes les charges inductives (MV1, MV2).

11. Circuit selon la revendication 1, caractérisé en ce qu'une unité de circuit du circuit de commande et de surveillance est composée de deux branches de commande et de surveillance (101 à 108, 201 à 208) de structure identique pour la commande de deux amplificateurs de connexion (T1, T2).

12. Circuit selon la revendication 11, caractérisé en ce que les branches de commande et de surveillance (101 à 108, 201 à 208) appartenant à une unité de circuit, possèdent une partie commune de liaison (309 à 517) avec le micro-ordinateur (MC).

13. Circuit selon la revendication 11 ou 12, caractérisé en ce que plusieurs unités de circuit sont rassemblées en un circuit intégré.

14. Circuit selon la revendication 13, caractérisé en ce que deux unités de circuit sont rassemblés chaque fois en un circuit intégré.
